# EUROPEAN PATENT APPLICATION

(11) **EP 4 215 415 A1**
(43) Date of publication of application: **26.07.2023**
(21) Application number: 22152668.4
(22) Date of filing: 21.01.2022
(51) Int. Cl.: B60R 1/00, B60K 35/00

(54) **METHOD OF OPERATING A DISPLAY DEVICE, VEHICLE AND SYSTEM**

(71) Applicant: Bayerische Motoren Werke Aktiengesellschaft, 80809 München (DE)
(72) Inventor: Zaki, Tarek, 81829 München (DE)

(57) **Abstract**

A method of combining primary image content and secondary image content for display on a display device in or on a vehicle for road use is disclosed. The method comprises:
providing primary image content and secondary image content, wherein the secondary image content is based on a signal provided by at least one camera of the vehicle, and the primary image content is not based on a signal provided by said at least one camera of the vehicle; and
combining the primary image content and the secondary image content to generate combined image content for display on the display device,
wherein combining the primary image content and the secondary image content to generate the combined image content is done in such a way that the secondary image content represents less than a predetermined percentage of the combined image content, wherein the predetermined percentage is less than 80%.

## Description

The present invention relates to method of operating a display device in or on a vehicle for road use, as well as to a vehicle. The invention further relates to a corresponding system and a computer program product.

A large number of people experience motion sickness (also referred to as kinetosis, among other names) when travelling in a vehicle. Typically, this problem is exacerbated if the person travelling in the vehicle and susceptible to motion sickness (in the following simply "person") looks at an object within the vehicle, in particular an object which is substantially still with respect to the vehicle, while the vehicle may accelerate and decelerate, both in a longitudinal direction (i.e. the main direction of travel) or in a transverse direction, for example when the vehicle passes through a curve, makes a turn, passes over a speed bump or other uneven road surface etc. As used herein, the term "acceleration", "accelerate" and similar is preferably intended to be understood to encompass not only acceleration, but also deceleration (effectively a negative acceleration), in any direction, unless the context specifies otherwise.

DE 10 2019 220 045 A1 discloses a method of visualising information regarding the current acceleration of a vehicle. According to this disclosure, crosshairs are displayed on a display device (such as a smartphone) on which other content (e.g. work-related content, a film or other entertainment content) is also displayed. The crosshairs are superimposed on the display device. The current acceleration of the vehicle is detected by a 3D acceleration sensor and the crosshairs moved accordingly. For example, when the vehicle accelerates, a horizontal line of the crosshairs is moved downwards on the display device to suggest a backward movement of an inert mass. When the vehicle decelerates, the horizontal line is moved upwards to suggest a forward movement of an inert mass. Similarly, when the vehicle turns left, a vertical line of the crosshairs is moved to the right, and vice versa when the vehicle turns right. In the absence of acceleration, the crosshairs are in a central, neutral position.

It is an object of at least some embodiments of the present invention to provide an alternative and/or improved method relating to the operation of a display device. It is a further such object to provide a corresponding computer program product, a system and a vehicle comprising such a system.

In a first aspect, the present invention provides a method of combining primary image content and secondary image content for display on a display device in or on a vehicle for road use, the method comprising:
- providing primary image content and secondary image content, wherein the secondary image content is based on a signal provided by at least one camera of the vehicle, and the primary image content is not based on a signal provided by said at least one camera of the vehicle; and
- combining the primary image content and the secondary image content to generate combined image content for display on the display device,
- wherein combining the primary image content and the secondary image content to generate the combined image content is done in such a way that the secondary image content represents less than a predetermined percentage of the combined image content, wherein the predetermined percentage is less than 80%.

The term "primary image content" - herein also referred to as "primary content" - is in particular intended to be understood to mean image content (for display on the display device) which a user of the display device intends to watch or study. Such primary image content may for example be work-related content, a film or other entertainment content such as video games. The primary image content may for example be stored in a memory device (such as a computer memory) forming part of the vehicle or display device or may be stored on a data carrier or may be downloadable or may be generated substantially immediately prior to display (for example in the case of many video games).

The term "secondary image content" - herein also referred to as "secondary content" - is, as mentioned above, intended to be understood to mean image content which is based on a signal provided by at least one camera of the vehicle. Such a camera may in particular have a field of view in a forward direction with respect to the main direction of travel of the vehicle, and may generally correspond to, or overlap with, a view through a windshield of the vehicle in a forward direction. The secondary image content may also be based on signals provided by two or more cameras of the vehicle, for example cameras having adjacent or overlapping fields of view. The respective signals from the two or more cameras can be combined, for example through suitable stitching techniques, to generate a signal on which the secondary image content is based.

As used herein, both the primary image content and the secondary image content may refer to the corresponding content when displayed on the display device, or to an underlying signal or data or information from which a corresponding visible display on the display device can be generated.

As per the first aspect of the present invention, by using the secondary image content to generate the combined image content, which, ultimately, can be displayed on the display device, a user of the display device may be given a relatively realistic impression of the environment surrounding the vehicle - at least in one direction, such as a forward direction, with respect to the vehicle. This may reduce the effects of motion sickness - in a similar manner as looking through the windscreen of the vehicle might do. At the same time, the user of the display device can still watch, or work on, the primary image content, given that the secondary image content represents less than 80% of the combined image content.

In the following, some embodiments of the invention will be described. These can be combined with each other, and embodiments described in connection with one aspect of the invention can be combined with (embodiments of) other aspects of the invention, or with other embodiments disclosed herein, unless such a combination is explicitly excluded or technically impossible.

According to some embodiments, the method further comprises at least one of:
- providing the combined image content to the display device
- making the combined image content available to the display device
- displaying the combined image content on the display device.

The method in accordance with the first aspect of the invention may (primarily) be performed for example by a head unit or onboard computer of the vehicle. This may be connected to the display device by a wired or wireless connection in order to provide the combined image content to the display device or to make the combined image content available to the display device. The method in accordance with the first aspect of the invention may however also be performed by the display device itself and for this purpose would be provided with the primary image content and the secondary image content.

According to some embodiments, the predetermined percentage is less than 70%, less than 60%, less than 50%, less than 40%, less than 30%, less than 20% or less than 10%.

The larger the predetermined percentage is, the more effectively the method in accordance with the first aspect of the invention may be able to be used to reduce the effects of motion sickness. On the other hand, even at smaller percentages - as little as 10% or even less - the method in accordance with the first aspect of the invention may still be able to be used to reduce the effects of motion sickness whilst allowing the primary image content to represent a greater percentage of the combined image content. This may be advantageous in that a user can better focus on the primary image content whilst (subconsciously) perceiving the secondary image content, which may reduce the effects of motion sickness.

According to some embodiments, the predetermined percentage corresponds to a ratio of X : Y, wherein
X is an area of the display device occupied by the secondary image content when displayed on the display device, and
Y is an area of the display device occupied by the combined image content when displayed on the display device.

In accordance with these embodiments, the predetermined percentage affects or determines the size of the area on which the secondary image content is displayed, leaving the remaining area of the display device (or of a display portion such as a (touch)screen of the display device) available for the display of the primary image content (and free from the secondary image content).

According to some embodiments, when displayed on the display device, the secondary image content occupies a portion, in particular a strip, at or near one edge, two edges, three edges or four edges of a display portion of the display device, or a portion towards one corner of a display portion of the display device.

Such a strip may in particular be a substantially rectangular portion at or near one or more edges of the display portion. The strip or strips may extend along the entire respective edge or edges or only along a portion of the respective edge or edges, for example occupying only a central portion along the respective edge or edges. The strip or strips could for example be located at only two opposite edges, for example the left and right edges of the display portion.

If the secondary image content occupies a portion towards one corner of the display portion, this could for example be a small image of the entire field of view of the at least one camera.

According to some embodiments, when displayed on the display device, the secondary image content occupies a frame-like portion at or near a periphery of a display portion of the display device.

Such a frame-like portion would be a (substantially) continuous frame along the periphery of the display portion, leaving a central portion within the frame available for the display of the primary image content.

A variety of other techniques exist for displaying the primary image content in a first portion of a display portion of the display device and the secondary image content in a second portion of the display portion of the display device (the second portion being different from the first portion). Without limitation, such techniques may include:
a) A window-in-window technique, where the primary image content occupies a first window and the secondary image content occupies a second window. For example, the second window may be smaller than the first window, or vice versa. According to a further development, the windows can be resized and/or moved by the viewer as desired.
b) A side-by-side approach - effectively two (non-overlapping) windows next to each other, respectively for the primary image content and the secondary image content. Again, there may be the option of changing the size of the respective windows.
c) A technique whereby the secondary image content occupies the large majority of the display portion of the display device, whilst the primary image content occupies only a relatively small portion. For example, the primary image content could merely consist of relatively brief information, in particular text-based information, such as information regarding music being played within the vehicle, for example the title of a piece of music being played within the vehicle.

According to some embodiments, combining the primary image content and the secondary image content to generate the combined image content comprises blending the primary image content and the secondary image content, wherein the predetermined percentage is indicative of the weighting applied to the secondary image content when the primary image content and the secondary image content are being blended.

A variety of blending techniques can be used in this context. These will be familiar to one skilled in the art. Through the use of a blending technique, potentially the entire area of the display portion of the display device can be used for displaying the primary image content. Nevertheless, a user can (subconsciously) perceive the secondary image content (which may also be displayed over the entire area of the display portion of the display device, blended with the primary image content), which may reduce the effects of motion sickness.

According to some embodiments, the primary image content and the secondary image content are blended only over a portion of a display portion of the display device, in particular at or near one edge, two edges, three edges, four edges or in a frame-like portion at or near a periphery of a display portion of the display device or in a portion towards one corner of a display portion of the display device.

These embodiments advantageously combine the blending technique with the technique discussed above in which the secondary image content is displayed only over a portion of the display portion of the display device. A central portion of the display portion of the display device may remain free of the secondary image content and can be used to display the primary image content (only).

According to some embodiments, when displayed on the display device, the secondary image content shows a representation, in particular a photographic representation or a processed version thereof, of the road ahead of the vehicle. Enabling a user of the display device to see, at least subconsciously, the road ahead, in particular the imminent course of the road ahead, may be particularly effective in reducing the effects of motion sickness, not least since this may enable the user to anticipate forthcoming curves in the course of the road.

In a second aspect, the present invention provides a computer program product comprising a program code which is stored on a computer readable medium, for carrying out a method in accordance with the first aspect, or any of its embodiments, or any of its/their steps or combination of steps.

In a third aspect, the present invention provides a system for combining primary image content and secondary image content for display on a display device in or on a vehicle for road use, the system comprising:
- a first interface for receiving primary image content; and
- a second interface for receiving secondary image content;

wherein the secondary image content is based on a signal provided by at least one camera of the vehicle, and the primary image content is not based on a signal provided by said at least one camera of the vehicle;
   - the system further comprising a processing unit for combining the primary image content and the secondary image content to generate combined image content for display on the display device,
wherein the processing unit is arranged to combine the primary image content and the secondary image content in such a way that the secondary image content represents less than a predetermined percentage of the combined image content, wherein the predetermined percentage is less than 80%.

In embodiments of the third aspect of the invention, the processing unit may, for example, form part of a head unit or onboard computer of the vehicle. It may however also form part of the display device, for example. The first and second interfaces may be a wired or wireless interface for connection to other entities. Further, the first and second interfaces may be formed by one (common) interface.

According to some embodiments, the system further comprises said display device.

The display device may, for example, comprise
- a built-in display device of the vehicle
- a removable, proprietary display device of the vehicle
- a personal mobile device, in particular a computing device, in particular a laptop computer, a tablet computer, a smartphone, a smartwatch or smart glasses.

According to some embodiments, the system further comprises said at least one camera.

In a fourth aspect, the present invention provides a vehicle comprising a system in accordance with the first aspect, or any of its embodiments.

Also disclosed herein is a method of operating a display device, the method comprising:
obtaining acceleration information regarding a vehicle;
obtaining orientation information regarding an orientation of the display device; and
operating the display device as a function of the acceleration information and the orientation information.

Various types of acceleration information and ways to obtain the acceleration information and the orientation information regarding an orientation of the display device will be explained below.

Operating the display device as a function not only of the acceleration information but also the orientation information allows the orientation of the display device to be taken into account. This may in particular mean that, given a particular acceleration (information), what is displayed on the display device will depend on the orientation of the display device. In other words, given a particular acceleration (information), what is displayed on the display device when (held) in a first orientation will in general differ from what is displayed on the display device when (held) in a second orientation different from the first orientation.

In particular, operating the display device as a function of the orientation information does not simply mean that the viewing mode of the display device (for example a smartphone) switches between portrait mode and landscape mode depending on how the display device is held. Instead, what is meant is that the acceleration information and the orientation information together are processed in a manner still to be described, to result in a modification of the image content to be displayed on the display device. In particular, given a particular acceleration of the vehicle, this modification will depend on the orientation (information) of, or regarding, the display device, and in particular will be different in two different orientations of the display device even when the viewing mode of the display device is the same in both orientations of the display device (e.g. landscape mode in both orientations of the display device, or portrait mode in both orientations of the display device).

Using the above technique, the modification or the modified image content may be able to represent the acceleration of the vehicle more realistically than has been possible according to the prior art. In particular, the inventor has appreciated that motion sickness can be reduced particularly effectively if there is a close correlation between the acceleration of the vehicle and the modification of the image content, in particular as interpreted by a person in whose field of view the display device is located. The inventor has appreciated that, whilst ideally there is a close correlation between the acceleration of the vehicle and the modification of the image content both in terms of the magnitude (or proportionality) and the direction (as further explained below), it may be particularly beneficial if there is a close correlation in terms of the direction.

Various ways of visualising the acceleration information are possible, and the invention is not limited to one particular implementation. In particular, one skilled in the art, using the present disclosure as a guideline, will be able to apply the principles of the invention to other ways of visualising the acceleration information than those explicitly described herein.

One particular way of visualising the acceleration information, where the advantages of the present invention become particularly clear, will briefly be described here, by way of example only. In this example we assume that a person, i.e. a passenger in a vehicle, is watching a film on a display device, in this example a tablet computer. The person is holding the tablet computer vertically in front of them. Instead of a film, a person could also be watching other entertainment content or could be looking at work-related content. In the following, such content is also referred to as "primary content".

In this example, the primary content occupies a central portion of the screen (or display portion) of the tablet computer, for example a portion corresponding to 95% of the available (area of the) display portion. An outer frame portion corresponding to 5% of the available display portion initially remains unused and may, for example, remain black. The display device can be operated in such a way that a modification is applied to the displayed content so that it simulates the acceleration of the vehicle, or the effects which the acceleration of the vehicle would have on the central portion if the central portion were an inert mass. For example, it is best to imagine that the central portion is suspended in a resilient manner from the periphery (or frame or edge) of the display device, for example by four springs linking the centre of each side of the central portion to the centre of each side of the periphery of the display device. When the vehicle is stationary or is moving at a constant speed in a straight line in a forward direction (i.e. in the absence of any acceleration other than gravity), the central portion remains stationary in the centre of the display portion. When the vehicle accelerates, the (area of the) central portion would become bigger (e.g. occupying 97% of the available display portion), giving the viewer the impression that the central portion has moved towards the viewer. This (virtual) movement towards the viewer simulates the behaviour of the inert mass which the central portion is supposed to resemble. In this scenario, the centre of the central portion would remain stationary, i.e. the central portion would have increased in equal proportions in all four directions (up, down, left and right).

In a different scenario, the display device is not held vertically in front of the person, but at an angle on the person's lap, i.e. tipped forward, for example at a 45° angle, such that the upper edge of the display device is located towards the front of the vehicle and the lower edge towards the back of the vehicle. The left and right edges of the display device extend in a plane which is vertical and which is parallel to the direction of travel of the vehicle. In this scenario, if the vehicle accelerates and the same modification as described above were to be applied (i.e. enlargement of the central portion in equal proportions on all sides), a typical viewer would have the impression - based on what they see on the display portion - that the vehicle accelerates at a 45° angle in a forward and downward direction. In other words, the simulated acceleration would no longer correspond to, or have a close correlation with, the actual acceleration of the vehicle. Embodiments of the present invention can overcome this problem by taking the orientation of the display device into account. In the last scenario just described, the modification would involve the central portion not only becoming larger (again from e.g. 95% to 97%), but also moving downwards on the display portion. Since the display device is held at a 45° angle, this downward movement would give the viewer the impression that the central portion has "slipped backwards". The combination of the central portion becoming larger and also slipping backwards may give the person a more realistic (visual) impression of the acceleration of the vehicle. In other words, there is a better correlation between the acceleration of the vehicle and the modification of the displayed content. This may better counter the effects of motion sickness.

Other forms of acceleration, including deceleration (braking) and acceleration in a transverse direction can be visualised in a corresponding manner. Similarly, pursuant to embodiments of the present invention, other orientations of the display device can be taken into account, including:
- orientations of the display device held flat with the display portion facing upwards, or downwards (held above the head)
- orientations of the display device held sideways (i.e. the left edge, or the right edge, facing forwards)
- orientations of the display device being held upright, with the display portion facing forwards (e.g. with the viewer facing backwards, as may sometimes be the case in a bus, coach or recreational vehicle, for example)
- any orientation between the orientations explicitly mentioned above, or mixtures of the above orientations.

In the sense of embodiments of the invention, the term "acceleration information" can, in principle, mean any information which characterises the acceleration of the vehicle.

This may in particular comprise a numerical value or values, in particular a set of two, three or more values (e.g. one value for each Cartesian direction), in particular a vector or information representing a vector. In particular, the acceleration information would be such that a computing device can process it. Accordingly, the acceleration information is not simply a theoretical value of acceleration that the vehicle may achieve (sometimes expressed in terms of time taken to accelerate from 0 to 100 km per hour), but an actual acceleration (current or anticipated) of the vehicle.

According to some embodiments, the acceleration information comprises information regarding a current, actual acceleration of the vehicle and/or information regarding an anticipated acceleration of the vehicle.

A current, actual acceleration (in a longitudinal and/or transversal direction) can for example be measured. An anticipated acceleration can for example be derived by estimating a future acceleration (in a longitudinal and/or transversal direction), for example based on information from a navigation system and/or from one or more cameras, in particular forming part of the vehicle. Both the information from a navigation system and from one or more cameras may allow the course of a road to be determined on which the vehicle travels, so that an anticipated acceleration can be estimated therefrom. For example, if it is known that the vehicle is approaching a bend in the road, a transverse acceleration can be anticipated. The information from one or more cameras may (also) allow the presence of other vehicles in the vicinity of the vehicle in question, in particular in front of the vehicle in question, to be taken into account, in particular their speed. For example, if there is a slower vehicle in front of the vehicle in question, it can be expected that the vehicle in question may accelerate to overtake the slower vehicle.

According to some embodiments, obtaining the acceleration information comprises one or more of the following, in particular at multiple points in time:
- obtaining the acceleration information in a sensor-based manner
- obtaining the acceleration information with the aid of a sensor forming part of the vehicle
- obtaining the acceleration information by detecting a position of an acceleration control device, in particular of an accelerator pedal of the vehicle
- obtaining the acceleration information by detecting a rotational speed of a motor or of one or more wheels of the vehicle
- obtaining the acceleration information with the aid of one or more accelerometers and/or gyroscopes
- obtaining the acceleration information by detecting a position and/or orientation of the vehicle, in particular with the aid of a positioning system, in particular a satellite-based positioning system.

Obtaining the acceleration information by detecting a position of an acceleration control device, in particular of an accelerator pedal of the vehicle, may have the advantage that, given that there is typically a delay (albeit in some vehicles a very small delay) between an accelerator control device such as an accelerator pedal being actuated and the vehicle actually accelerating, information regarding the acceleration of the vehicle is available even before the acceleration takes place. In this way, the acceleration information can be processed and the display device can be operated substantially at the same time as the acceleration actually taking place, potentially even before the acceleration actually takes place, or with only a slight delay after the onset of the acceleration. In this way, an improved correlation between the acceleration and a corresponding modification of the image content to be displayed may be achieved.

Obtaining the acceleration information at multiple points in time may provide up-to-date information so that the correlation between acceleration and displayed content can be maintained over time. Further, obtaining the acceleration information at multiple points in time may be necessary so that the acceleration can be calculated, in particular if the acceleration information is derived from measurements of speed (e.g. rotational speed of engine or wheel) or from measurements of a (changing) position of the vehicle.

According to some embodiments, obtaining the orientation information regarding an orientation of the display device comprises obtaining the orientation information regarding an orientation of the display relative to the vehicle, in particular relative to an orientation of the vehicle. This may improve the correlation between the acceleration of the vehicle and the (modification of the) displayed content.

For example, the orientation of both the display device and the vehicle can be determined (in particular with respect to the same reference, e.g. a satellite or Earth's gravity as a common reference), in particular as a 3D vector or similar, and the vector representing the orientation of the vehicle can be subtracted from the vector representing the orientation of the display device, to obtain the orientation of the display relative to the (orientation of the) vehicle.

According to some embodiments, obtaining the orientation information regarding an orientation of the display device comprises one or more of the following, in particular at multiple points in time:
- obtaining the orientation information in a sensor-based manner
- obtaining the orientation information with the aid of a sensor forming part of the vehicle
- obtaining the orientation information by detecting a position of a mounting device for the display device
- obtaining the orientation information with the aid of one or more accelerometers and/or gyroscopes of the display device
- obtaining the orientation information with the aid of a positioning system, in particular a satellite-based positioning system.

Again, obtaining the orientation information at multiple points in time may provide up-to-date information so that the correlation between acceleration and displayed content can be maintained over time. This can be used, for example, to adjust the (modification of the) displayed content to take into account a changing orientation of the display device even if the acceleration of the vehicle has not changed during that time.

A mounting device for the display device may for example comprise a hinge via which the display device is mounted with respect to the vehicle, for example to the ceiling of the vehicle, as is sometimes the case with ceiling mounted RSE.

In the case of a headrest display (e.g. integrated within the headrest of a front seat so that the display can be viewed by a person on a rear seat of a car), the orientation of the display device may be permanently fixed with respect to the headrest. However, the headrest itself could be adjustable, or the seat (and in particular the back rest) to which the headrest is connected would typically be adjustable. In this case, the "mounting device" would be the headrest, the back rest or the entire seat.

According to some embodiments, operating the display device comprises:
calculating an image content to be displayed as a function of the acceleration information and the orientation information; and
displaying the calculated image content.

According to these embodiments, the image content which has been calculated as a function of the acceleration information and the orientation information can effectively be image content which is substantially independent from other image content (i.e. the primary content) to be displayed. The (independent) image content which has been calculated as a function of the acceleration information and the orientation information can accordingly be regarded as "secondary content". For example, such secondary content could comprise sliding bars in the periphery of the display portion of the display device in an area which is not occupied by the primary content. The sliding bars, which will be explained in more detail below, can be used to visualise the acceleration of the vehicle by moving left and right, or up and down. In these embodiments, the primary content may therefore remain unmodified.

Alternatively, or additionally, in some embodiments, operating the display device comprises:
receiving, or making available, unmodified image content;
- modifying the unmodified image content, taking into account the acceleration information and the orientation information, to generate modified image content; and
- displaying the modified image content.

In these embodiments, the unmodified image content could be the primary content, which the person intends to view. This is then modified and displayed. Accordingly, the acceleration information and orientation information is used to modify the primary content as, for instance, in the above example of the primary content occupying a central portion of the display portion, which is then enlarged or reduced and/or moved slightly.

In some embodiments it is also possible to combine both approaches. That is, the primary content could be modified as a result of the acceleration information and the orientation information. Additionally, secondary content, such as sliding bars, could be displayed in the periphery of the display portion - substantially independently from the primary content.

According to some embodiments, the display device comprises one of the following:
- a built-in display device of the vehicle
- a removable, proprietary display device of the vehicle
- a personal mobile device, in particular a computing device, in particular a laptop computer, a tablet computer, a smartphone, a smartwatch or smart glasses.

Some examples of built-in display devices of the vehicle have already been mentioned, such as a ceiling-mounted display device or a headrest display. Other display devices fall into this category, such as a central information display (CID). These devices may be permanently fixed with respect to the remainder of the vehicle, except that their orientation may be changed.

However, these or other display devices or portions thereof may be removable. For example, a headrest display may comprise a holder or cradle or similar carrying a display device. When the display device is placed in the holder or cradle, it is substantially fixed with respect to the headrest. However, it can be removed from the holder or cradle. It may be proprietary to the vehicle in the sense that it may have proprietary connectors which (typically) only fit a corresponding connector of the holder or cradle, or the communication protocols of the holder or cradle (of the vehicle) need to match those of the display device, so that a generic display device (such as a personal mobile device) might not be able to communicate with the vehicle via the holder or cradle.

Nevertheless, a personal mobile device may be able to communicate with the vehicle via a wired or wireless interface.

Some embodiments provide a method of providing content modification information, or modified image content, for use by a display device, the method comprising: obtaining acceleration information regarding a vehicle;
obtaining orientation information regarding an orientation of the display device; determining content modification information, or generating modified image content from unmodified image content, as a function of the acceleration information and the orientation information; and
providing the content modification information or the modified image content to the display device, or making the content modification information or the modified image content available to the display device.

Whilst some embodiments disclosed herein include the operation of the display device, others focus on the provision of content modification information or of modified image content, for use by the display device. Accordingly, pursuant to such embodiments, the content modification information or the modified image content may be provided, or made available, by a device other than the display device, for use by the display device. For example, the content modification information or modified image content can be provided by an onboard computer or such like.

The content modification information may in particular comprise instructions or other information as to how content to be displayed, in particular primary content, is to be modified. Content modification information may be provided to the display device, or made available for use by the display device, so that the display device can modify the primary content.

The modified image content may comprise image content which has already been modified so that, when received by the display device, it can be displayed substantially "as is". In particular, there may then not be any need for the display device to modify this content further by taking the acceleration information and/or orientation information into account.

The content modification information or the modified image content may also be provided by a device external to the vehicle, or a stand-alone device travelling in or on the vehicle.

According to some embodiments, providing the content modification information or the modified image content to the display device comprises providing the content modification information or the modified image content to the display device via a wired or wireless interface, and/or
making the content modification information or the modified image content available to the display device comprises making the content modification information or the modified image content available to the display device at a wired or wireless interface.

The wired interface may, for example, be an electrical connector (for example of an onboard computer of the vehicle) to which the display device is connected by wire. If the display device is connected by a hardwired connection (for example to an onboard computer of the vehicle), the interface may be regarded as a point along this hardwired connection.

As used in the present specification, the terms "wired", "hardwired" or similar are intended to encompass not only connections by means of a (metallic) wire, but also optical connections, preferably also any other type of physical connection allowing for the transmission of information.

Some embodiments provide a display device comprising:
an interface for receiving acceleration information regarding a vehicle;
means for receiving or determining orientation information regarding an orientation of the display device; and
a processing unit for operating the display device as a function of the acceleration information and the orientation information.

What has been stated above regarding an interface, in particular a wired or wireless interface, also applies, *mutatis mutandis,* to the interface of the display device.

A means for receiving orientation information regarding an orientation of the display device may include an interface (wired or wireless) for receiving such information, for example from a sensor which forms part of the vehicle, for example an optical sensor (e.g. a camera) or a physical sensor sensing the orientation of the display device, for example a sensor detecting a position of a mounting device for the display device. The means for receiving orientation information may comprise the interface for receiving the acceleration information.

Alternatively or additionally, the display device may itself include a sensor or similar (i.e. means) for determining the orientation information, for example one or more accelerometers and/or gyroscopes or communication interfaces for receiving positioning signals, for example from a (satellite-based) positioning system.

Some embodiments provide a system for providing content modification information, or modified image content, for use by a display device, the system being for use with, or in, a vehicle, the system comprising:
means for receiving or determining acceleration information regarding the vehicle;
means for receiving or determining orientation information regarding an orientation of the display device; and
a processing unit for determining content modification information, or for generating modified image content from unmodified image content, as a function of the acceleration information and the orientation information; and
an interface for providing the content modification information or the modified image content to the display device, or for making the content modification information or the modified image content available to the display device.

These embodiments focus on the provision, or the making available, of the content modification information or the modified image content. The means for receiving acceleration information or orientation information may comprise a wired or wireless interface, in particular the same wired or wireless interface, or two different interfaces. The means for determining acceleration information or orientation information may include one or more sensors or similar for determining the acceleration or orientation information, for example one or more accelerometers and/or gyroscopes or communication interfaces for receiving positioning signals, for example from a (satellite-based) positioning system. The interface for providing the content modification information or the modified image content to the display device, or for making the content modification information or the modified image content available to the display device, may comprise, or form part of, the means for receiving or determining the acceleration or orientation information.

According to some embodiments of the display device or of the system, the interface comprises a wired or wireless interface, and/or
the display device comprises one of the following:
- a built-in display device of the vehicle
- a removable, proprietary display device of the vehicle
- a personal mobile device, in particular a computing device, in particular a laptop computer, a tablet computer, a smartphone, a smartwatch or smart glasses.

Some embodiments provide a vehicle comprising the display device, or the system, as described above.

Some embodiments provide a computer program product comprising a program code which is stored on a computer readable medium, for carrying out a method as described above, or any of its steps or combination of steps.

The terms "first", "second", "third" and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Where the term "comprising" or "including" is used in the present description and claims, it does not exclude other elements or steps. Where an indefinite or definite article is used when referring to a singular noun, e.g. "a", "an" or "the", this includes a plural of that noun unless something else is specifically stated.

Further, unless expressly stated to the contrary, "or" refers to an inclusive "or" and not to an exclusive "or". For example, a condition "A or B" is satisfied by any one of the following: A is true (or present) and B is false (or not present), A is false (or not present) and B is true (or present), and both A and B are true (or present).

Further advantages, features and applications of the present invention are provided in the following detailed description and the appended figures, wherein:
- **Figure 1**: schematically shows a system according to an embodiment of the present invention.
- **Figure 2**: schematically shows a display device according to an embodiment of the present invention.
- **Figure 3**: shows a flow chart illustrating a method according to an embodiment of the present invention.
- **Figure 4**: shows a flow chart illustrating a method according to a further embodiment of the present invention.
- **Figure 5**: schematically shows a display portion of a display device in a first state according to an embodiment of the present invention.
- **Figure 6**: schematically shows the display portion of the display device of Fig. 5 in a second state.
- **Figure 7**: schematically shows a side view of a display device in a first state according to an embodiment of the present invention.
- **Figure 8**: schematically shows the display device of Fig. 7 in a second state.
- **Figure 9**: schematically shows the display device of Fig. 7 in a third state.
- **Figure 10**: schematically shows a display portion of a display device according to an embodiment of the present invention.
- **Figure 11**: schematically shows image content for display on a display device in a first state.
- **Figure 12**: schematically shows image content for display on a display device in a second state.
- **Figure 13**: schematically shows image content for display on a display device in a third state.
- **Figure 14**: schematically shows image content for display on a display device in a fourth state.
- **Figure 15**: schematically shows image content for display on a display device in a fifth state.
- **Figure 16**: schematically shows image content for display on a display device in a sixth state.
- **Figure 17**: schematically shows image content for display on a display device in a seventh state.
- **Figure 18**: schematically shows a display device displaying image content according to an embodiment of the present invention.
- **Figure 19**: schematically shows a display device displaying image content according to an embodiment of the present invention.
- **Figure 20**: schematically shows a display device displaying image content according to an embodiment of the present invention.
- **Figure 21**: schematically shows a display device displaying image content according to an embodiment of the present invention.
- **Figure 22**: schematically shows a vehicle according to an embodiment of the present invention.
- **Figure 23**: schematically shows image content for display on a display device.
- **Figure 24**: schematically shows image content for display on a display device.

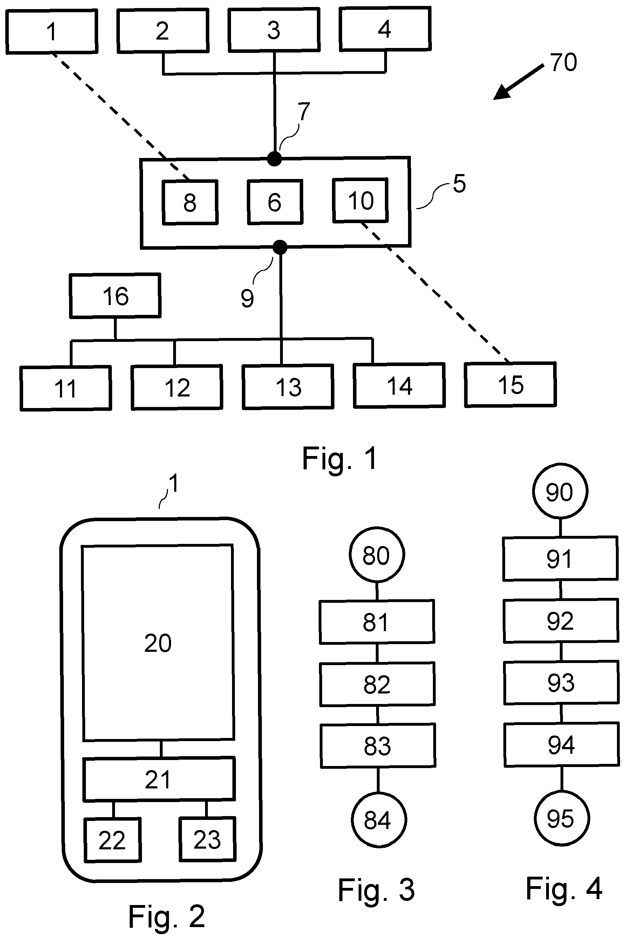

Whilst the following description of certain embodiments primarily describes each figure in turn, occasional reference is also made to features shown in other figures. Fig. 1 schematically shows a system 70 according to an embodiment of the present invention. The system 70, or at least some parts thereof, may form part of a vehicle 60. The system 70 comprises an onboard computer 5 comprising a processing unit 6 for processing data or information. Onboard computer 5 is also equipped with a wired interface 7 for communication with one or more display devices, such as central information display (CID) 2, a head-up display (HUD) 3 and a rear seat entertainment (RSE) display device 4.

Onboard computer 5 is equipped with a further wired interface 9 for communication with one or more sensors, such as a sensor 11 of an acceleration control device, e.g. an accelerator pedal, a sensor 12 of a motor of the vehicle, e.g. forming part of an engine control unit, a sensor 13 associated with one or more wheels of the vehicle, or an orientation detection unit such as an accelerometer or gyroscope 14. Onboard computer 5 is also connected to a camera 16 in or on the vehicle, in particular an outside camera of the vehicle. Camera 16 is arranged to provide image content - herein also referred to as "secondary image content" or simply "secondary content", as mentioned above. The secondary image content may be in the form of a signal. In particular, the secondary image content comprises a representation of the road ahead of the vehicle (including other road users and surrounding landscape, if applicable).

Onboard computer 5 is also equipped with a wireless interface 8 for wireless communication with a display device 1 such as a personal mobile device, for example a laptop computer, a tablet computer, a smartphone, a smartwatch or smart glasses. The wireless communication can for example make use of the Bluetooth^{®} communication standard but could also make use of a type of wireless communication which has a larger operating range, and may in particular make use of a public mobile phone network.

Onboard computer 5 is equipped with a further wireless interface 10 for wireless communication with a(n external) positioning system 15, such as a satellite-based positioning system or a terrestrial positioning system.

Whilst interfaces 7, 9 are shown as separate items, they could also be combined into one single interface. Similarly, wireless interfaces 8, 10 could be combined into one single interface.

In some embodiments, sensors 11 to 14 are intended provide acceleration information to onboard computer 5. To this end, sensor 11 can detect a(n angular) position of an acceleration control device (or, more generally, the desired acceleration), sensor 12 can detect a rotational speed of the motor, sensor 13 can detect the rotational speed of a wheel, and accelerometer/gyroscope 14 can provide acceleration information regarding a current, actual acceleration. Sensors 11 to 14 either provide one or more values characterising the acceleration of the vehicle, or other values (such as measurements of (rotational) speed) from which onboard computer 5 can derive the acceleration of the vehicle. Onboard computer 5 can also derive the acceleration of the vehicle based on positioning information obtained via communication with positioning system 15. Deriving the acceleration (or a value or other information characterising the acceleration) of a vehicle from sensors such as sensors 11 to 14 or from positioning information obtained via communication with a positioning system such as positioning system 15 is known per se and will therefore not be described in detail.

Several sensors 11 to 14 are shown in Fig. 1, in addition to a positioning system 15 and camera 16. However, in some embodiments, the system 70 may comprise only camera 16 and, optionally, only one or some of the sensors 11 to 14 (or indeed other sensors from which acceleration information can be derived) and/or a wireless interface 10 for communication with positioning system 15.

Similarly, whilst several display devices 1 to 4 are indicated in Fig. 1, in some embodiments, the system may comprise only one or some of these display devices 1 to 4, or indeed other types of display devices, together with the appropriate wired or wireless interface.

In some embodiments, the acceleration information can be provided by onboard computer 5 to one or more of the display devices 1 to 4 so that the display device(s) can take the acceleration information into account for the purpose of operating a display portion of the respective display device.

Alternatively or additionally, onboard computer 5 can receive, via wired interface 7 and/or wireless interface 8, orientation information from one or more of the display devices 1 to 4 regarding the orientation of the respective display device. Onboard computer 5 can then determine content modification information, or generate modified image content from unmodified image content, as a function of the acceleration information and the orientation information. The content modification information can then be provided to the respective display device to enable or instruct the display device to modify image content (which is to be displayed on the respective display device) accordingly. If onboard computer 5 generates modified image content, this already takes into account the acceleration information and the orientation information so that the respective display device does not need to perform further processing or modification of the content on the basis of the acceleration information or orientation information.

The orientation information regarding the orientation of one or more of the display devices 1 to 4 can be obtained in a variety of ways. Many display devices, in particular personal mobile devices, comprise an orientation detection device such as an accelerometer/gyroscope, in particular a 3D accelerometer/gyroscope, the output of which can represent the orientation information (or orientation information can be obtained from this output). The orientation of the display device can also be determined with reference to a positioning system, such as positioning system 15 described above.

In particular in the case of a display device which is proprietary to the vehicle (either substantially permanently fixed or removable, e.g. from a holder or cradle) the orientation can be detected by means of a sensor detecting, for example, the position of a hinge via which the display device or its holder/cradle is attached to the remainder of the vehicle. The type of sensor is however not limited to this and could also comprise, for example, a camera detecting an orientation of the display device.

It is to be noted that the system 70 shown in Fig. 1 is merely one example of a system in accordance with the present invention. In particular, not all entities shown in Fig. 1 are necessarily present in all embodiments. For example, the following would also be considered to be a system in accordance with the present invention:
- a system comprising substantially only onboard computer 5 with appropriate interfaces for connection to other entities
- a system comprising substantially only onboard computer 5 and camera 16 and, optionally, one or more of the sensors 11 to 14 (and/or appropriate interfaces for connection to other entities)
- a system comprising substantially only onboard computer 5 and one or more of the display devices 1 to 4 (and/or appropriate interfaces for connection to other entities), as well as, optionally, camera 16.

Fig. 2 schematically shows a display device 1 according to an embodiment of the present invention. Although the appearance of the display device 1 shown in Fig. 2 generally resembles that of a smartphone, other types of display devices are of course possible.

Display device 1 comprises a display portion 20 on which image content is to be displayed. This is connected to a processing unit 21, which in turn comprises, or is connected to, an orientation detection unit 22, for example one or more accelerometers and/or gyroscopes. Processing unit 21 further comprises, or is connected to, a storage device 23 for storing data, in particular image content (media content / primary content) to be displayed. A wireless interface (or a wired interface, e.g. in the case of a different type of display device) for communication with onboard computer 5 is not shown in Fig. 2.

Examples of the operation of display device 1 and system 70 will further be described below with reference to Figs. 3 and 4.

Fig. 3 shows a flow chart illustrating a method according to an embodiment of the present invention. After the start 80 of the method, primary mage content is provided (81). The primary mage content may for example be retrieved from a memory device (such as a computer memory) forming part of the vehicle 60, for example forming part of the display device 1 to 4 or an onboard computer 5, e.g. forming part of a head unit. In other variants, the primary mage content may be stored on a data carrier or may be downloadable or may be generated substantially immediately prior to display. In addition, (secondary) image content is provided (82) by one or more cameras, such as camera 16. It is to be noted that the primary and secondary image content can be provided simultaneously, or in any desired sequence.

The primary and secondary image content is then combined (83), for example by the display device 1 to 4 or the onboard computer 5, to provide combined image content (herein also referred to as modified image content) for display on the display device 1 to 4 . Examples of how the primary and secondary image content can be combined will be explained below. The method can then end (84).

Fig. 4 shows a flow chart illustrating a method according to a further embodiment of the present invention. After the start 90 of the method, primary mage content is provided (91) as described above with reference to Fig. 3. In addition, secondary image content is provided (92) by one or more cameras, such as camera 16, as also described above with reference to Fig. 3. Again, the primary and secondary image content can be provided simultaneously, or in any desired sequence.

The primary and secondary image content is then combined (93), for example by the display device 1 to 4 or the onboard computer 5, to provide combined image content. The combined image content is then provided to, or made available to, the respective display device (94), or the display device 1 to 4 then displays the combined image content (94), after which the method can end (95).

Also described herein is a method according to a variant, which may be combined with embodiments of the present invention. In this variant, acceleration information regarding the vehicle 60 is obtained, for example via sensors 11 to 14 or positioning system 15. In addition, orientation information regarding an orientation of a display device 1 to 4 is obtained, as has already been described above. The acceleration information and the orientation information can be obtained simultaneously, or in any desired sequence.

The display device 1 to 4 is then operated as a function of the acceleration information and the orientation information. This can be achieved either by onboard computer 5 receiving the acceleration information and the orientation information, and processing same, to provide modified image content which is then provided to the respective display device for display on a display portion of the respective display device, or by the respective display device receiving the acceleration information and the orientation information and then processing same to provide modified image content for display on a display portion of the respective display device.

In a further variant, acceleration information regarding the vehicle 60 is obtained, and orientation information regarding an orientation of a display device is obtained, as has already been described above, again in any desired sequence, or simultaneously. Then, content modification information is determined, or modified image content is generated from unmodified image content, as a function of the acceleration information and the orientation information, which is then provided to, or made available to, the respective display device.

The determining of the content modification information or the generation of the modified image content can be achieved by onboard computer 5. If onboard computer 5 determines content modification information, this effectively represents information or instructions as to how any content to be displayed on the respective display device should be modified. If onboard computer 5 generates modified image content (for example from unmodified image content stored within, or available to, onboard computer 5), the display device does not need to receive the acceleration information since it can simply display the modified image content.

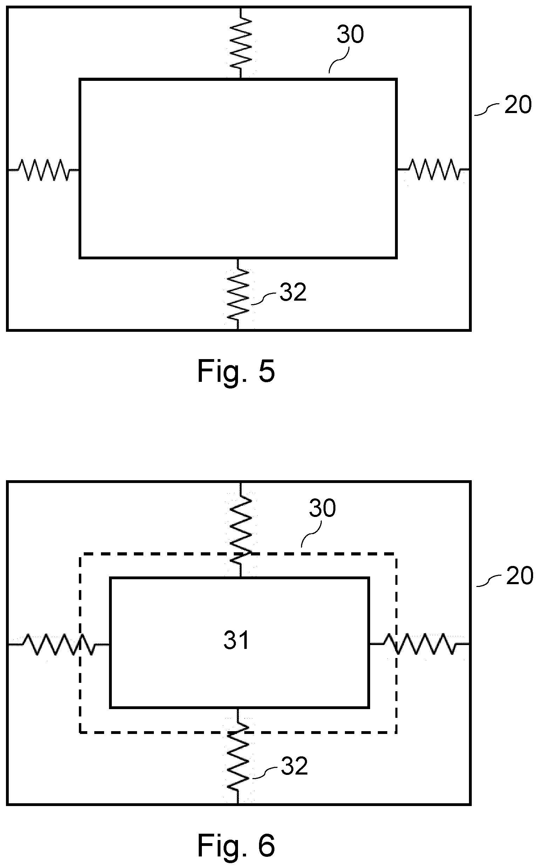

Fig. 5 schematically shows a display portion 20 of a display device in a first state according to an embodiment of the present invention, and Fig. 6 schematically shows the display portion of the display device of Fig. 5 in a second state. Some aspects of this embodiment have already been described above. In this embodiment, a central portion (here labelled 30) of the display portion 20 is intended for display of primary content, such as work-related content, a film or other entertainment content. A peripheral portion (not labelled) around the central portion is left blank, for example black, i.e. in this first state the primary content is not displayed on this peripheral portion.

A set of four springs 32, each attached between the centre of the four sides of the central portion and the centre of the four sides of display portion 20 is indicated in Fig. 5. In some embodiments these (virtual) springs 32 could actually be shown on display portion 20, but in other embodiments these would be omitted. They are primarily shown in Fig. 5 to illustrate the principle of operation of the display device.

Whilst Fig. 5 shows the central portion 30 relatively small and the frame around the central portion relatively large for ease of illustration. The central portion could also occupy a larger proportion of the available display area, for example 95%, as mentioned above.

If the vehicle is stationary or is travelling at a constant speed in a straight line (i.e. no acceleration in any direction), the central portion would be concentric with respect to the display portion 20, and the springs 32 would be in a "neutral" state. The central portion would therefore display unmodified image content 30.

Fig. 6 shows the display portion 20 in the second state, which (assuming the display is positioned upright in front of a person, with the person facing forward and the display portion facing backwards) corresponds to a deceleration of the vehicle (e.g. braking) travelling in a straight line. The area occupied by the central portion from Fig. 5 (i.e. the area of the unmodified image content 30) is shown in dashed lines in Fig. 6. However, due to the deceleration of the vehicle, the central portion has shrunk concentrically, to result in a smaller central portion, in which modified image content 31 is displayed. In other words, the modification comprises shrinking of the displayed content, simulating the behaviour of an inert mass. That is, due to the deceleration, the central portion ("inert mass") would move forward, away from the viewer, which would be visualised by the central portion becoming smaller and the springs 32 being elongated.

As a variant to the embodiment described with respect to Figs. 5 and 6, the primary content can occupy the entire available display area of display portion 20 in the absence of acceleration. Subtle movements of the displayed content (of the type described with respect to Figs. 5 and 6) representing the acceleration of the vehicle would then result in the displayed content shrinking (e.g. giving rise to a (black) frame around the primary content) or a (small) portion of the primary content being cropped away at one or more edges.

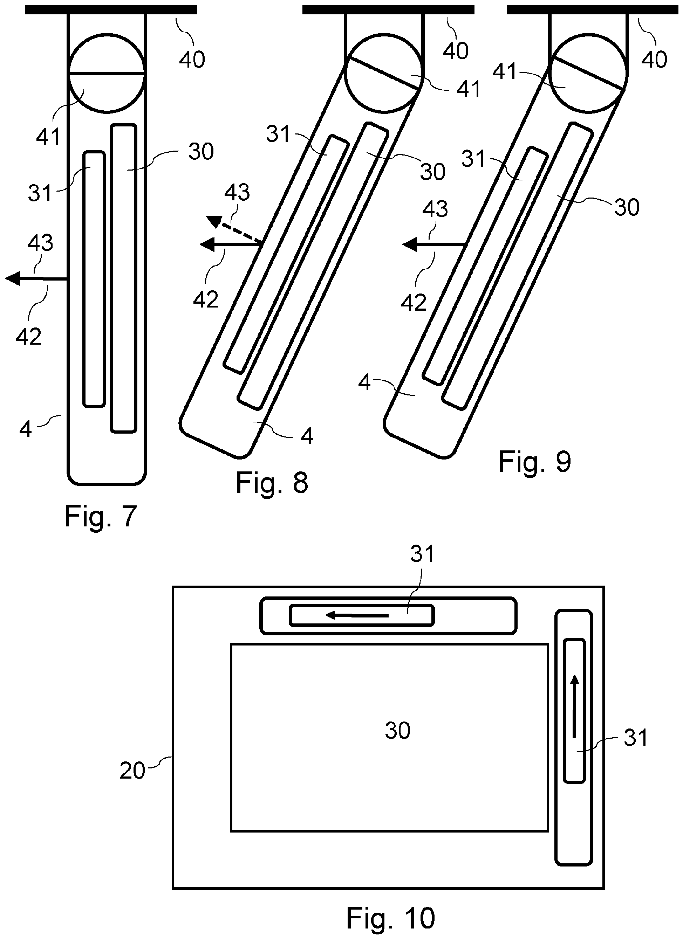

Fig. 7 schematically shows a side view of a display device 4 in a first state according to an embodiment of the present invention. This effectively corresponds to what is shown in Figs. 5 and 6. In this example, display device 4 is a rear seat entertainment (RSE) display device 4, which is attached to the ceiling 40 of the vehicle 60 by means of a hinge 41. This example assumes that the vehicle 60 is travelling towards the left and is decelerating (braking), as indicated by arrow 42.

The unmodified image content 30 of Fig. 5 is shown as a rectangle 30. This unmodified image content 30 would of course be displayed on, and occupy a central portion of, a display portion (not labelled) on the right side of display device 4 in Fig. 7, but for the purpose of illustration it is shown here as a rectangle within the volume of display device 4.

As the vehicle 60 decelerates, the central portion would shrink as shown in Fig. 6. This is illustrated in Fig. 7 by modified image content 31, which is shown as a second rectangle somewhat smaller than the first rectangle of unmodified image content 30. Further, the rectangle 31 is shown further left in Fig. 7, simulating the movement of an inert mass away from the person, i.e. in the forward direction of the vehicle 60. In this example the viewer therefore has the impression that the image content has moved away from the viewer, i.e. has moved left along arrow 43 in Fig. 7. This direction of (virtual) movement 43 is therefore aligned with the direction of deceleration 42 of the vehicle 60, and therefore there is a correlation between the acceleration (here: deceleration) of the vehicle and the modification (i.e. the virtual movement) of the displayed content.

Whilst Figs. 5 to 7 illustrate the case in which the display is positioned upright in front of the person, with the person facing forward and the display portion facing backwards, the display may not always be in this position in relation to a passenger in the vehicle 60. This is illustrated in Figs. 8 and 9.

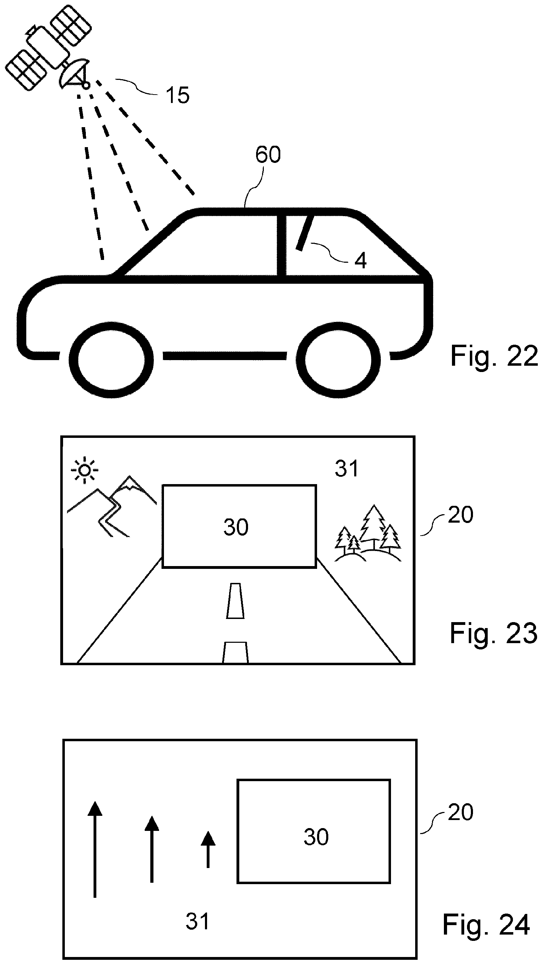

Figs. 8 and 9 show the display device 4 of Fig. 7 in a second state, in which the display device 4 is tilted about an axis defined by hinge 41 so that the lower end of display device 4 is located further forward (in the direction of travel of the vehicle 60) than the upper end. This position is also illustrated in Fig. 22, which shows vehicle 60 and RSE 4 (as well as a satellite 15 for communication with vehicle 60).

Considering again the case of the vehicle 60 decelerating, Fig. 8 illustrates the case in which the orientation of the display device 4 (with respect to vehicle 60) is not taken into account. Arrow 42 again illustrates the direction of travel and deceleration of the vehicle 60, and arrow 43 illustrates the direction of the virtual movement of the image content (cf. unmodified image content 30 and modified image content 31). As is shown in Fig. 8, the arrows 42 and 43 are not aligned. In other words, there is no correlation (or only an imperfect correlation) between the acceleration (deceleration) of the vehicle 60 and the modification (i.e. the virtual movement) of the displayed content.

Fig. 9 shows the same example of Fig. 8, but this time the orientation of the display device 4 is taken into account. As shown in Fig. 9, the central portion or the displayed content has not only shrunk (cf. unmodified image content 30 and modified image content 31) but has also moved downwards. The net effect of these two modifications is that the direction 43 of the virtual movement of the image content is again aligned with the direction of travel and deceleration of the vehicle 60. The correlation between the acceleration (deceleration) of the vehicle 60 and the modification (i.e. the virtual movement) of the displayed content has therefore been restored. This may provide the viewer with a better visualisation of the acceleration of the vehicle 60, thereby (better) reducing the effects of motion sickness.

Whilst Fig. 9 illustrates the case of a display device 4 able to move about one axis only, the principles explained above can of course be applied to other orientations of a display device, including handheld display devices.

A wide variety of ways of visualising the acceleration of the vehicle 60 on a display device are possible, in accordance with the present invention, some of which will be illustrated in the following. Generally, the modifications do not need to be particularly significant, e.g. in terms of area occupied by any features representing the image modification, or in terms of magnitude of the movement of any such features.

Fig. 10 schematically shows a display portion 20 of a display device according to an embodiment of the present invention. A central portion is occupied by primary content 30, which can remain unmodified. As shown in Fig. 10, above the unmodified image content 30, a smaller rectangle 31 is shown within a larger rectangle. As indicated by a horizontal arrow, the smaller rectangle can slide left and right within the larger rectangle, thereby representing modified image content 31, as a function of the acceleration of the vehicle 60 and further as a function of the orientation of the display device of which display portion 20 forms a part. Similarly, to the right of unmodified image content 30, another smaller rectangle 31 is shown within a larger rectangle. As indicated by a vertical arrow, the smaller rectangle can slide up and down within the larger rectangle, thereby representing modified image content 31, as a function of the acceleration of the vehicle 60 and further as a function of the orientation of the display device of which display portion 20 forms a part.

Assuming the display device is held in an upright position in front of a person, or tilted (slightly) forward, the movement of the modified image content 31 as indicated by the arrow towards the left may represent the vehicle 60 turning right, and the movement of the modified image content 31 as indicated by the arrow up may represent the vehicle 60 decelerating (braking). Similarly, a movement of the modified image content 31 at the top of the figure towards the right may represent the vehicle 60 turning left, and a movement of the modified image content 31 on the right-hand edge of the figure in a downward direction may represent the vehicle 60 accelerating. A central position of the smaller rectangles within their associated larger rectangles may indicate a state in which there is no acceleration.

By way of contrast, if, for example, the display device was tipped backwards (e.g. see Fig. 22), an acceleration of the vehicle 60 would be visualised by the modified image content 31 on the right-hand side of the figure moving upwards, and a deceleration by the modified image content 31 moving downwards.

It can therefore be seen that the way in which any content to be displayed is modified may depend on the orientation of the respective display device. From the example illustrated with reference to Fig. 10, it is apparent that the assignment between the acceleration of the vehicle 60 and the image modification on the right-hand side of the display portion 20 is switched from
deceleration => upwards
acceleration => downwards

when the display device is held upright or tipped forward, to
   deceleration => downwards
   acceleration => upwards
when the display device is tipped backwards. In order to avoid frequent switching of this assignment, for example when the display device is generally held upright but is frequently tipped slightly forwards and slightly backwards, some form of hysteresis can be implemented so that, for example, the switch only takes place if the display device remains either tipped forward or tipped backward for at least a predetermined or configurable period of time, for example 5 seconds or 10 seconds.

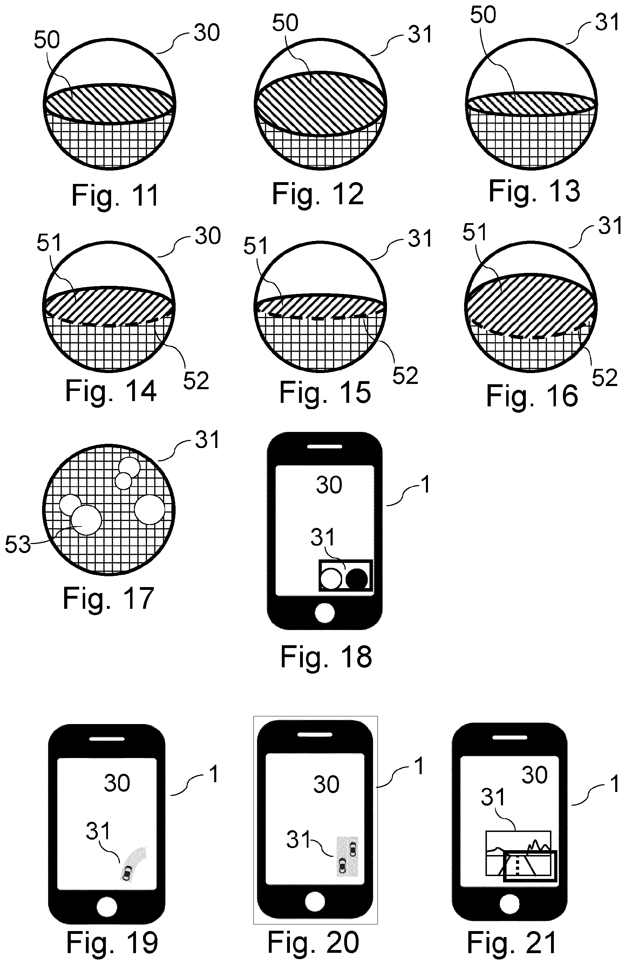

Figs. 11 to 17 illustrate a further embodiment of visualising the acceleration information on a display device, in particular as a function of the orientation of the respective display device. In this embodiment, an image 30 of a sphere is displayed on a display portion of the display device, for example in one corner of the display portion so as not to interfere significantly with the primary content (if any). The image of the sphere is intended to simulate a sphere partially filled with a liquid, for example water, and is intended to simulate the behaviour of an actual sphere partially filled with a liquid as if it was being transported in or on the vehicle 60 and subject to acceleration and deceleration in various directions.

Fig. 11 schematically shows image content for display on a display device in a first state. In this state, water fills the lower half of the sphere. The top half is empty. The oval shape in the middle of the sphere is intended to represent the water surface 50. Various ways of graphically representing water and a water surface (or some other liquid and its surface) are known in the art and will not be described in detail. In Fig. 11, the water surface 50 is flat, without being disturbed. This image would be displayed when vehicle 60 is stationary or is travelling at a constant speed in a straight line. The sphere of Fig. 11 therefore represents unmodified image content 30.

Water surface 50 is shown as an oval (as if it was seen from slightly above), rather than simply as a line (as if it was seen from the side at exactly the same level as the water surface), to give the viewer a more realistic visual impression of a 3D shape. The image of Fig. 11 would present itself to a viewer when the display device is held upright or tipped forward, and assuming the viewer faces in a forward direction, looking at the display device.

Fig. 12 schematically shows the sphere of Fig. 11 in a second state, when the vehicle 60 decelerates. The water, due to its inertia, has now tipped towards the front, so the edge of the oval water surface 50 which appears to be "further away" from the viewer is now at a higher level than in Fig. 11, and the edge of the oval water surface 50 which appears to be "closer" to the viewer is now at a lower level than in Fig. 11, thereby effectively increasing the area of the oval 50 representing the water surface (on the display portion).

Fig. 13 schematically shows the sphere of Fig. 11 in a third state, when the vehicle 60 accelerates. The water, due to its inertia, has now tipped towards the back, so the edge of the oval water surface 50 which appears to be "further away" from the viewer is now at a lower level than in Fig. 11, and the edge of the oval water surface 50 which appears to be "closer" to the viewer is now at a higher level than in Fig. 11, thereby effectively reducing the area of the oval 50 representing the water surface (on the display portion).

Fig. 14 schematically shows the sphere of Fig. 11 in a fourth state. In this state, the water again fills the lower half of the sphere. The top half is empty. However, the water surface 51 is now seen from below. In Fig. 14, this is indicated by a different hatching of the central oval 51 when compared with Fig. 11, and further by a dashed line 52 representing the edge of the oval water surface 51 which appears to be "further away" from the viewer. Other suitable ways of illustrating a water surface as seen from below will be apparent to one skilled in the art.

In Fig. 14, the water surface 51 is again flat, without being disturbed. The sphere therefore represents unmodified image content 30. This image would present itself to a viewer when vehicle 60 is stationary or is travelling at a constant speed in a straight line and when the display device is tipped back, as indicated for example in Fig. 22.

Fig. 15 schematically shows the sphere of Fig. 14 in a second state, when the vehicle 60 decelerates. The water, due to its inertia, has now tipped towards the front, so the (dashed line) edge 52 of the oval water surface 51 which appears to be "further away" from the viewer is now at a higher level than in Fig. 11, and the (solid line) edge of the oval water surface 51 which appears to be "closer" to the viewer is now at a lower level than in Fig. 11, thereby effectively reducing the area of the oval 51 representing the water surface (on the display portion).

Fig. 16 schematically shows the sphere of Fig. 14 in a third state, when the vehicle 60 accelerates. The water, due to its inertia, has now tipped towards the back, so the (dashed line) edge 52 of the oval water surface 51 which appears to be "further away" from the viewer is now at a lower level than in Fig. 14, and the (solid line) edge of the oval water surface 51 which appears to be "closer" to the viewer is now at a higher level than in Fig. 14, thereby effectively increasing the area of the oval 51 representing the water surface (on the display portion).

Fig. 17 schematically shows the sphere of Figs. 11 or 14 in a further state. A mixture of water and (foam) bubbles 53 fills the entire sphere, suggesting water splashing. The sphere of Fig. 17 therefore represents modified image content 31. The sphere could be illustrated in this way for example if the vehicle 60 passes over a speed bump or an uneven road surface, where up and down acceleration follows in close succession.

Fig. 18 schematically shows a display device 1 displaying image content according to an embodiment of the present invention. In this embodiment, the majority of the display portion can be used for primary content (unmodified content) 30. Modified image content 31, here in the form of two circles, is shown in one corner of the display portion of the display device 1. Other geometrical shapes are possible. These could have different colours, one indicating acceleration in a lengthwise (forward) direction (for example a green circle), and the other indicating deceleration (for example a red circle). When the vehicle is stationary or travelling at a constant speed, neither circle would show any colour and might remain white, black or transparent. In a further development, the intensity of the colour and/or the colour tone and/or the transparency of the shape displayed can be correlated to the amplitude of the acceleration of the vehicle (e.g. low intensity colour and/or pale colour and/or high transparency for weak acceleration; high intensity colour and/or dark colour and/or low transparency for strong acceleration). Whilst this embodiment might indicate the acceleration of vehicle 60 without taking the orientation of the display device 1 into account, this form of representation may nevertheless provide a viewer (looking at unmodified image content 30) with an indication of a current acceleration of the vehicle 60 and thereby decrease the effects of motion sickness.

Fig. 19 schematically shows a display device 1 displaying image content according to an embodiment of the present invention. In this embodiment, a schematic representation 31 of (a portion of) the road ahead (in a top view representation) is shown in one corner of the display portion of the display device 1. In particular, the portion of the road displayed may include (or extend up to, and include) the next imminent turn or direction of the road ahead. A top view of the vehicle 60 travelling along the displayed portion of the road ahead is also shown. In this embodiment, the information underlying the representation of the road ahead could be obtained from a navigation system and/or from one or more cameras mounted in or on the vehicle 60. Whilst this embodiment might not directly indicate the acceleration of vehicle 60 and might not take the orientation of the display device 1 into account, this form of representation may nevertheless provide a viewer at least with an indirect indication of an acceleration of the vehicle 60, in particular in a transverse direction since the viewer would be able to see when the vehicle 60 travels along a curve. In particular, the viewer may be able to anticipate a forthcoming acceleration before it arises or is felt. This may also decrease the effects of motion sickness.

Fig. 20 schematically shows a display device 1 displaying image content according to an embodiment of the present invention. In this embodiment, a schematic representation 31 of the road ahead (in a top view representation) is shown in one corner of the display portion of the display device 1. A top view of the vehicle 60 travelling along the displayed portion of the road ahead is also shown. A top view representation of other vehicles (here the vehicle in front) is also shown. In this embodiment, the information underlying the representation of the road ahead could be obtained from a navigation system and/or from one or more cameras mounted in or on the vehicle 60. The information underlying the representation of other road users could be obtained from one or more cameras mounted in or on the vehicle 60. This embodiment could therefore be regarded as a further development of the embodiment of Fig. 19, since, according to the embodiment of Fig. 20, a representation of other road users is additionally shown. Whilst this embodiment might not directly indicate the acceleration of vehicle 60 and might not take the orientation of the display device 1 into account, this form of representation may nevertheless provide a viewer at least with an indirect indication of an (impending) acceleration of the vehicle 60 as the viewer would be able to see when the vehicle 60 is about to overtake another vehicle. This may also decrease the effects of motion sickness.

Fig. 21 schematically shows a display device 1 displaying image content according to an embodiment of the present invention. In this embodiment, a schematic representation 31 of the road ahead (in a first-person perspective), as well as the landscape as seen from the vehicle 60, is shown in one corner of the display portion of the display device 1. This embodiment could be regarded as a variant of the embodiments shown in Fig. 19 and/or 20. Again, in this embodiment, the information underlying the representation of the road ahead and the landscape could be obtained from a navigation system and/or from one or more cameras, such as camera 16, mounted in or on the vehicle 60. The information underlying the representation of other road users (if shown) could be obtained from one or more cameras, such as camera 16, mounted in or on the vehicle 60.

In a variant of this embodiment, the representation of the road ahead (including other road users, if applicable) and/or landscape displayed in a corner of the display portion of the display device 1 is not a schematic representation thereof, but a photographic representation as detected by one or more cameras, such as camera 16.

Whilst this embodiment might not directly indicate the acceleration of vehicle 60 and might not take the orientation of the display device 1 into account, this form of representation may nevertheless provide a viewer at least with an indirect indication of an acceleration of the vehicle 60. This may also decrease the effects of motion sickness.

Fig. 23 schematically shows image content for display on a display portion 20 of a display device according to a further embodiment. This embodiment is similar to the embodiment described with reference to Fig. 21 or its variants. However, in the embodiment of Fig. 23, the unmodified (primary) content 30 is displayed in a central portion of the display portion 20, whilst modified (or secondary) content 31 (a representation of the road ahead and/or surrounding landscape) is displayed in a frame-like portion around this central portion. The modified content 31 may again comprise a schematic representation or a photographic representation as detected by one or more cameras, such as camera 16.

Whilst, for ease of illustration, Fig. 23 shows the central portion relatively small and the frame-like portion displaying the modified content 31 relatively large, the area occupied by the central portion could be much larger, for example occupying 80% to 99%, for example 95%, of the available display area, whilst the modified content 31 is displayed in a relatively thin frame-like portion around the central area. The inventor has found that displaying the modified content 31 in such a small frame-like portion may be sufficient to reduce the effects of motion sickness, whilst making most of the display area available for the primary content. Further, the central portion may be concentric or non-concentric with respect to the display portion 20.

In a variant, both the unmodified (primary) content 30 and the modified (or secondary) content 31 is displayed over the entire area of the display portion 20, i.e. the signals respectively representing the unmodified (primary) content 30 and the modified content 31 are mixed or blended to drive the display portion 20 with the combined image content (combination of primary image content 30 and secondary image content 31), so that a viewer is presented with a visual impression similar to a head-up display. The ratio of unmodified (primary) content 30 to modified content 31 could be fixed or configurable (by a user) or adaptive, e.g. depending on ambient brightness. Ratios for example between 50:50 and 95:5, or between 60:40 and 90:10, or between 70:30 and 80:20 may be particularly suitable, but the percentage of secondary image content 31 in the combined image content could also be as much as 80%, for example.

As a further variant, it is possible to display a blend of primary image content 30 and secondary image content 31 only in one portion of the display portion 20, for example in the frame-like outer portion shown in Fig. 23, whilst keeping another portion of the display portion 20, for example the central rectangle within the frame-like outer portion shown in Fig. 23, free from secondary image content (and only displaying primary image content there).

Fig. 24 schematically shows image content for display on a display portion 20 of a display device. According to this embodiment, the primary content may occupy the entire available display area of the display portion 20. However, a portion 31 of this is modified in order to simulate the acceleration of the vehicle 60. Another portion 30 can remain unmodified. In order to determine which portion of the display portion 20 should display modified image content 31 and which portion should display unmodified image content 30, a camera may be provided to determine which region of the display portion 20 is focused on by a viewer. The camera (not shown) may be a camera integrated into the display device (as is common in smartphones) or may be provided separately therefrom. The information from the camera is then processed, either by the display device or by other entities of the system, to determine a region of the display portion 20 corresponding to the focus the viewer. Whilst region of unmodified image content 30 is shown as a rectangle in Fig. 24, other shapes, including a circular shape or an oval shape (for example with the longer axis of the oval shape corresponding to, or being parallel to, a straight line through the centre of the eyes of the viewer) are possible. The percentage of the area in which unmodified image content 30 is displayed in relation to the (entire) area of display portion 20 may be a fixed value or may alternatively be configurable. The inventor has found that the area in which unmodified image content 30 is displayed can be as little as 20% of the area of display portion 20. This (relatively small) percentage does not unduly affect the viewing experience whilst leaving a relatively large area of display portion 20 available to indicate the acceleration of the vehicle. Larger percentages are also possible, for example at least 25%, at least 30%, at least 40% or at least 50%.

The acceleration of the vehicle 60 may be visualised within the region intended for modified image content 31. The modification to be applied may be determined for example in the way which has been described with reference to Figs. 5 and 6 (resulting in movement of pixels), or any other suitable manner. In particular, the modification may be determined as a function of the acceleration information and the orientation information, or only the acceleration information.

The modification due to the acceleration of vehicle 60 could be applied uniformly to the entire region of modified image content 31. However, this could result in significant distortions at the edge of region of unmodified content 30. In a variant, the modification can be applied gradually, in the sense that the magnitude of the modification (movement of pixels) increases with increasing distance from the region of unmodified content 30. This gradual increase could be applied over the entire region of modified image content 31, as has been indicated by three arrows in Fig. 24 (the size of the arrows does not necessarily correspond to the amount of movement of the image content but has been exaggerated for illustration purposes; typically, small amounts of movement are sufficient to reduce the effects of motion sickness). According to yet another variant, the increase in modification is distributed over a frame-like region around the region of unmodified image content 30. Outside this frame-like region the modification does not increase further.

Another variant combines the modification described with reference to Figs. 23 and 24. In this variant, a region 30 is again determined as described with reference to Fig. 24, i.e. a region focused on by a viewer. This region may display primary, unmodified content. Primary content is also displayed outside this region, but here, the primary content is mixed or blended with secondary or modified content (as has been described as a head-up display-like variant with reference to Fig. 23), e.g. an image of the road ahead and surrounding landscape, either in a schematic representation or in a photographic representation as detected by one or more cameras.

It has already been described above how the orientation of a display device (in relation to the vehicle 60) can be determined in order to obtain orientation information regarding the display device, for example using a sensor detecting, for example, the position of a hinge via which the display device or its holder/cradle is attached to the remainder of the vehicle 60, or using one or more accelerometers or gyroscopes of the display device. In the case of a display device in the form of a mobile device (for example a personal mobile device or a device proprietary to the vehicle 60 when this device is not attached to the remainder of the vehicle 60), any accelerometers/gyroscopes or similar of the display device may detect, or be subjected to, an acceleration which comprises three acceleration components: a) Earth's gravity, b) the acceleration of the vehicle 60 and c) acceleration due to any movement (translation and/or rotation) of the display device within the vehicle 60 (or, more generally, with respect to the vehicle 60). These acceleration components can be expressed, for example, as three 3-dimensional vectors, in particular in the mobile device's own coordinate system and will respectively be referred to as A, B and C. Pursuant to at least some embodiments of the present invention, it is envisaged that any modification of displayed content should not be affected by the movement of the display device within the vehicle 60 but should instead "visualise" the acceleration of the vehicle 60 as a function of the orientation of the display device with respect to the vehicle 60. The vehicle 60 itself may also be equipped with one or more sensors (e.g. accelerometers/gyroscopes) and, using these, can detect Earth's gravity and the acceleration of the vehicle 60, which can again be expressed, for example, as two 3-dimensional vectors, in particular in the vehicle's own coordinate system, and will respectively be referred to as D and E. Both the vehicle 60 and/or the mobile device will thus be able to detect, or be aware of, the common ground truth as a reference (Earth's gravity), from which A and D can be determined. By appropriate processing, in particular appropriate subtraction, of the detected acceleration values, the orientation of the (mobile) display device with respect to the (orientation of the) vehicle can be determined without this being affected by the movement of the display device within the vehicle 60. Guided by the present disclosure, the processing of the detected acceleration values will be clear to one skilled in the art and will therefore not be described in detail.

A measure of the acceleration of the vehicle 60 (obtained as a result of this processing) can then be used to determine the content modification information or the modified image content. In the embodiment of Fig. 10, for example, this measure of the acceleration of the vehicle 60 can be used to adjust the position of the sliding bars (smaller rectangles 31 shown within the larger rectangles) to visualise the acceleration of the vehicle 60 with the aim of reducing the effects of motion sickness. A measure of the movement of the display device (obtained as a result of the above processing) with respect to the vehicle 60, or the orientation of the display device obtainable therefrom, can then be used to normalise the (movement of the) sliding bars to give a constant and consistent perception to the user.

Similarly, in the context of Figs. 11 to 17, for example, the measure of the acceleration of the vehicle 60 can be used to adjust the "water surface" 50 or 51 to visualise the acceleration of the vehicle 60 with the aim of reducing the effects of motion sickness, and the measure of the movement of the display device with respect to the vehicle 60, or the orientation of the display device obtainable therefrom, can be used to normalise the orientation of the sphere (or "water" within the sphere) to give a constant and consistent perception to the user.

The measure of the acceleration of the vehicle 60 and the measure of the movement of the display device with respect to the vehicle 60, or the orientation of the display device obtainable therefrom, can be used in a corresponding manner in other embodiments, respectively to visualise the acceleration of the vehicle 60 with the aim of reducing the effects of motion sickness, and to normalise the feature by means of which the acceleration of the vehicle 60 is visualised, to give a constant and consistent perception to the user.

While at least one example embodiment of the present invention has been described above, it has to be noted that a great number of variations thereto exist. In particular, one or more embodiments described herein, or individual features thereof, can be combined with one another. Furthermore, it is appreciated that any described example embodiments only illustrate non-limiting examples of how the present invention can be implemented and that it is not intended to limit the scope, the application or the configuration of the apparatuses and methods described herein. Rather, the preceding description will provide the person skilled in the art with instructions for implementing at least one example embodiment of the invention, whereby it has to be understood that various changes of functionality and the arrangement of the elements of the example embodiment can be made without deviating from the subject-matter defined by the appended claims, as well as their legal equivalents.

### List of Reference Signs

- 1: display device (personal mobile device)
- 2: display device (Central Information Display, CID)
- 3: display device (Head-Up Display, HUD)
- 4: display device (Rear Seat Entertainment, RSE)
- 5: onboard computer
- 6: processing unit (of vehicle)
- 7, 9: wired interface
- 8, 10: wireless interface
- 11: (sensor for) acceleration control device (accelerator pedal)
- 12: (sensor for) motor (engine control unit)
- 13: (sensor for) wheel
- 14: orientation detection unit, accelerometer/gyroscope (of vehicle)
- 15: positioning system (satellite)
- 16: camera
- 20: display portion, screen
- 21: processing unit (of display device)
- 22: orientation detection unit, accelerometer/gyroscope (of display device)
- 23: storage device
- 30: (unmodified) image content
- 31: (modified) image content
- 32: (virtual) spring
- 40: ceiling (of vehicle)
- 41: hinge
- 42: direction of acceleration / deceleration / travel
- 43: direction of (virtual) movement of image content
- 50: "water surface" seen from above
- 51: "water surface" seen from below
- 52: "water line"
- 53: "foam bubbles"
- 60: vehicle
- 70: system
- 80 - 84: method steps
- 90 - 95: method steps

## Claims

1. A method of combining primary image content (30) and secondary image content (31) for display on a display device (1-4) in or on a vehicle (60) for road use, the method comprising:
providing primary image content (30) and secondary image content (31), wherein the secondary image content (31) is based on a signal provided by at least one camera (16) of the vehicle (60), and the primary image content (30) is not based on a signal provided by said at least one camera (16) of the vehicle (60); and
combining the primary image content (30) and the secondary image content (31) to generate combined image content (30, 31) for display on the display device (1-4),
wherein combining the primary image content (30) and the secondary image content (31) to generate the combined image content (30, 31) is done in such a way that the secondary image content (31) represents less than a predetermined percentage of the combined image content (30, 31), wherein the predetermined percentage is less than 80%.

2. The method of claim 1, further comprising at least one of:
- providing the combined image content (30, 31) to the display device (1-4)
- making the combined image content (30, 31) available to the display device (1-4)
- displaying the combined image content (30, 31) on the display device (1-4).

3. The method of claim 1 or 2, wherein the predetermined percentage is less than 70%, less than 60%, less than 50%, less than 40%, less than 30%, less than 20% or less than 10%.

4. The method of any one of claims 1 to 3, wherein the predetermined percentage corresponds to a ratio of X : Y, wherein
X is an area of the display device (1-4) occupied by the secondary image content (31) when displayed on the display device (1-4), and
Y is an area of the display device (1-4) occupied by the combined image content (30, 31) when displayed on the display device (1-4).

5. The method of claim 4, wherein, when displayed on the display device (1-4), the secondary image content (31) occupies a portion, in particular a strip, at or near one edge, two edges, three edges or four edges of a display portion (20) of the display device (1-4), or a portion towards one corner of a display portion (20) of the display device (1-4).

6. The method of claim 4, wherein, when displayed on the display device (1-4), the secondary image content (31) occupies a frame-like portion at or near a periphery of a display portion (20) of the display device (1-4).

7. The method of any one of claims 1 to 3, wherein combining the primary image content (30) and the secondary image content (31) to generate the combined image content (30, 31) comprises blending the primary image content (30) and the secondary image content (31), wherein the predetermined percentage is indicative of the weighting applied to the secondary image content (31) when the primary image content (30) and the secondary image content (31) are being blended.

8. The method of claim 7, wherein the primary image content (30) and the secondary image content (31) are blended only over a portion of a display portion (20) of the display device (1-4), in particular at or near one edge, two edges, three edges, four edges or in a frame-like portion at or near a periphery of a display portion (20) of the display device (1-4) or in a portion towards one corner of a display portion (20) of the display device (1-4).

9. The method of any one of claims 1 to 8, wherein, when displayed on the display device (1-4), the secondary image content (31) shows a representation, in particular a photographic representation or a processed version thereof, of the road ahead of the vehicle (60).

10. A computer program product comprising a program code which is stored on a computer readable medium, for carrying out a method in accordance with any one of claims 1 to 9, or any of its steps or combination of steps.

11. A system (70) for combining primary image content (30) and secondary image content (31) for display on a display device (1-4) in or on a vehicle (60) for road use, the system (70) comprising:
a first interface (9, 10) for receiving primary image content (30); and
a second interface (9, 10) for receiving secondary image content (31);
wherein the secondary image content (31) is based on a signal provided by at least one camera (16) of the vehicle (60), and the primary image content (30) is not based on a signal provided by said at least one camera (16) of the vehicle (60);
the system (70) further comprising a processing unit (6, 21) for combining the primary image content (30) and the secondary image content (31) to generate combined image content (30, 31) for display on the display device (1-4),
wherein the processing unit (6, 21) is arranged to combine the primary image content (30) and the secondary image content (31) in such a way that the secondary image content (31) represents less than a predetermined percentage of the combined image content (30, 31), wherein the predetermined percentage is less than 80%.

12. The system (70) according to claim 11, further comprising said display device (1-4), in particular wherein the display device (1-4) comprises:
a built-in display device (2-4) of the vehicle (60)
a removable, proprietary display device (4) of the vehicle (60)
a personal mobile device (1), in particular a computing device, in particular a laptop computer, a tablet computer, a smartphone, a smartwatch or smart glasses.

13. The system (70) according to claim 11 or 12, further comprising said at least one camera (16).

14. A vehicle (60) comprising the system (70) according to any one of claims 11 to 13.
